# EUROPÄISCHE PATENTSCHRIFT

(11) **EP 1 476 331 B1**
(45) Veröffentlichungstag und Bekanntmachung des Hinweises auf die Patenterteilung: **21.12.2005**
(21) Anmeldenummer: 02781105.8
(22) Anmeldetag: 23.09.2002
(51) Int. Cl.: B60R 21/01

(54) **FRONTSENSOR EINES FARHZEUGS**
FRONT SENSOR OF A VEHICLE
DETECTEUR FRONTALE D'UN VEHICULE

(30) Priorität: 09.02.2002 DE 10205398
(43) Veröffentlichungstag der Anmeldung: 17.11.2004
(73) Patentinhaber: ROBERT BOSCH GMBH, 70442 Stuttgart (DE)
(72) Erfinder: MATTES, Bernhard, 74343 Sachsenheim (DE); HERRMANN, Thomas, 74613 Oehringen (DE); RECKNAGEL, Rolf-Juergen, 07747 Jena (DE); AIDAM, Rolf, 79346 Endingen (DE)
(86) Internationale Anmeldenummer: PCT/DE2002/003569
(87) Internationale Veröffentlichungsnummer: WO 2003/066385

(56) Entgegenhaltungen:
- WO-A-00/32449
- DE-A- 3 942 343
- DE-C- 19 850 851
- US-A- 5 441 301
- US-A- 5 748 075

## Beschreibung

### Stand der Technik

Die Erfindung geht aus von einem Frontsensor eines Fahrzeugs nach der Gattung des unabhängigen Patentanspruchs.

Aus der Offenlegungsschrift EP 893 309 A1 ist eine Kollisionssensoranordnung für Kraftfahrzeuge bekannt. Dabei wird eine piezoelektrische und/oder piezoresistive Folie als Kollisionssensor vorgeschlagen.

US 5 441 301 A offenbart einen Frontsensor mit den Merkmalen des Oberbegriffs des Anspruchs 1.

### Vorteile der Erfindung

Der erfindungsgemäße Frontsensor eines Fahrzeugs mit den Merkmalen des unabhängigen Patentanspruchs hat demgegenüber den Vorteil, daß ein günstigerer Kollisionssensor, der prüfbar ist, kompakt gebaut werden kann und zum Anschluß an störsichere Schnittstellen zu einem zentralen Steuergerät geeignet ist.

Durch die in den abhängigen Ansprüchen aufgeführten Maßnahmen und Weiterbildungen sind vorteilhafte Verbesserungen des im unabhängigen Patentanspruch angegebenen Frontsensors eines Fahrzeugs möglich.

Das Sensierungselement ist in der Kavität als Druck- oder Temperatursensor ausgebildet ist, wobei dann bei einer Verformung der Kavität der adiabatische Druck bzw. Temperaturanstieg gemessen werden kann. Dies ist eine besonders schnelle Sensierungsmethode, um eine Kollision zu erfassen. Dabei ist Voraussetzung, daß die Kavität weitgehend geschlossen ist, so daß ein adiabatischer Druckanstieg möglich ist. Dafür kann beispielsweise eine Prallbox als Kavität vorgesehen sein, wobei auch mehrere Prallboxen in der Fahrzeugfront angeordnet sein können.

Weiterhin ist es von Vorteil, daß die Kavität sich nahezu über die ganze Fahrzeugbreite erstreckt, um insbesondere auch Fußgänger oder einzelne schmalere Elemente oder auch versetzte Unfälle in einfacher Weise zu erkennen.

Darüber hinaus ist es von Vorteil, daß die Kavität aus einem Kunststoff gefertigt ist, so daß beispielsweise die Stoßstangenverkleidung als eine solche Kavität genutzt werden kann. Weiterhin ist es möglich, daß der Kunststoff flexibel ausgebildet ist, so daß er bei einem Aufprall nicht notwendigerweise gebrochen oder anderweitig zerstört wird, sondern seine ursprüngliche Form wieder einnimmt. Insbesondere ist dabei von Vorteil, daß die Kavität wasserdicht ausgeführt ist, so daß eine Korrosion des Sensierungselements vermieden wird.

Schließlich ist auch von Vorteil, daß der Frontsensor mit Kavität und Sensierungselement über eine Stromschnittstelle mit einem zentralen Steuergerät für Rückhaltemittel verbunden ist, so daß das Steuergerät die Sensorsignale auswertet.

### Zeichnung

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Frontsensors, der an ein Steuergerät angeschlossen ist, Figur 2 ein Blockschaltbild des Sensierungselements, Figur 3 vom Frontsensor übertragene Daten, Figur 4 ein Ausführungsbeispiel des erfindungsgemäßen Frontsensors und Figur 5a sowie Fig. 5b einen Aufbau mit Prallboxen.

### Beschreibung

Stoßstangenkontaktsensoren werden z.B. unter anderem zur Fußgängeraufprallerkennung verwendet. Erfindungsgemäß wird nun ein Frontsensor vorgeschlagen, der in der Front des Fahrzeugs mit einer Kavität ausgestattet ist, wobei in der Kavität ein Sensierungselement vorgesehen ist, das in Abhängigkeit von der Verformung der Kavität einen Aufprall erkennt. Solche indirekten Verformungssensierungselemente können beispielsweise Druck- oder Temperatursensoren sein, die den adiabatischen Druck- oder Temperaturanstieg auswerten.

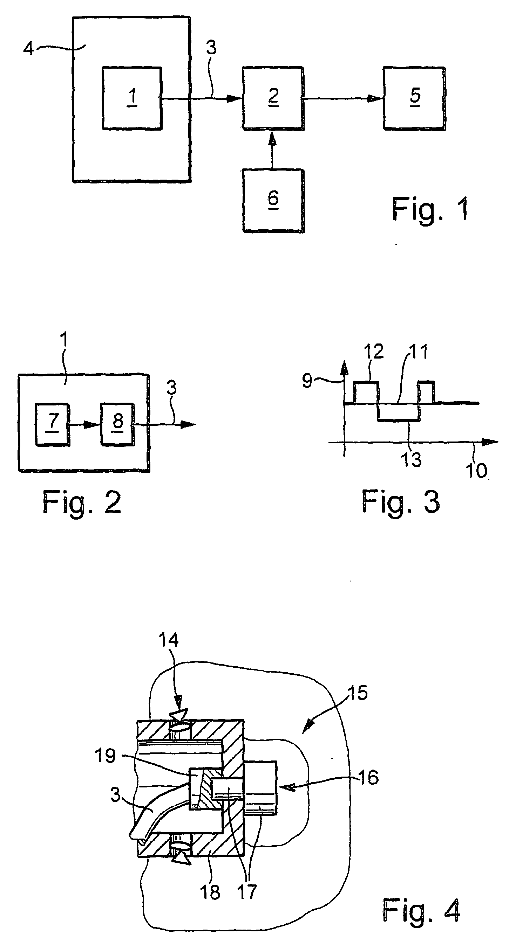

Figur 1 zeigt als Blockschaltbild den erfindungsgemäßen Frontsensor, der an ein Steuergerät angeschlossen ist. Der Frontsensor weist ein Sensierungselement 1 auf, das den eigentlichen Sensor und die auswertende Elektronik sowie einen Sender aufweist, der die ausgewerteten bzw. aufbereiteten Sensordaten über eine Leitung 3 zu einem Steuergerät 2 überträgt. Das Sensierungselement 1 ist in einer Kavität 4 untergebracht. Diese Kavität 4 ist weitgehend geschlossen, so daß sich bei einer Verformung der Kavität ein adiabatischer Druck- bzw. Temperaturanstieg ausbilden kann. Die Kavität ist im Bereich der Stoßstange angeordnet, wobei die Kavität selbst aus einem Kunststoff gefertigt ist. Alternativ ist es möglich, daß auch ein Metall verwendet werden kann, beispielsweise ein dünnes Blech. Teile der Elektronik des Sensierungselements 1 können auch ausgelagert von der Kavität sein. Weiterhin ist es möglich, daß auch das Steuergerät 2 in der Kavität 4 angeordnet ist. Hier ist das Sensierungselement 1 über die Leitung 3 mit dem Steuergerät 2 verbunden. Über die Leitung 3 wird dabei eine Powerline-Übertragung vorgenommen. D.h. die Sensordaten werden auf einem Gleichstrom aufmoduliert, der selbst zur Energieversorgung des Sensierungselements 1 verwendet wird. Alternativ ist es möglich, daß das Sensierungselement 1 in der Kavität 4 an einen Bus angeschlossen ist.

Neben dem erfindungsgemäßen Frontsensor sind auch noch weitere Sensoren an das Airbag-Steuergerät 2 angeschlossen, die einen Fußgängeraufprall detektieren können. Dazu ist hier der Sensor 6 an das Steuergerät 2 angeschlossen. Dieser Sensor 6 kann die Fußgängerabwickelkrafteinwirkung auf ein Motorhaubenvorderteil, die Fahrzeugbeschleunigung bzw. - geschwindigkeit und die zeitliche Signatur dieser Sensorsignale erzeugen. Das Airbag-Steuergerät 2 wertet dann die Signale aus, um zu erkennen, ob ein Fußgänger frontal erfaßt wurde. Das Steuergerät 2 ist dann mit Rückhaltemitteln 5 verbunden, die hier speziell für den Schutz von erfaßten Fußgängern verwendet werden. Beispielsweise wird dabei die Motorhaube angehoben, oder es werden Außen-Airbags gezündet. Das Airbag-Steuergerät 2 ist natürlich auch mit anderen Sensoren zur Aufprallerkennung verbunden und weiteren Rückhaltemitteln, die die Fahrzeuginsassen schützen sollen. Der Einfachheit halber ist dies hier weggelassen worden.

Der Temperatursensor für den adiabatischen Temperaturanstieg hat den großen Vorteil der einfachen Testbarkeit, die durch einen Heizstrom erreicht werden kann.

Figur 2 zeigt das Sensierungselement 1 als Blockschaltbild. Der Temperatursensor 7 ist dabei mit einer Elektronik 8 verbunden, die das Meßsignal des Temperatursensors verstärkt, digitalisiert und über die Leitung 3 versendet. In einer Weiterbildung ist es möglich, daß auch die Auswertung des Temperatursignals bereits in der Elektronik 8 vorgenommen wird. Dafür kann ein Prozessor oder ein ASIC verwendet werden. Auch für andere Sensoren wie den Drucksensor ist die Konfiguration so wie in Figur 2 beschrieben.

Figur 3 zeigt beispielhaft, wie die Daten auf dem Gleichstrom, der zur Energieversorgung des Sensors verwendet wird, moduliert werden. Auf der Ordinate 9 wird der Strom abgetragen, während auf der Abszisse 10 die Zeit abgelesen wird. Über einen Gleichstrom 11, der vom Steuergerät zum Sensierungselement 1 übertragen wird, werden Modulationen 12 und 13 durchgeführt, die die Sensorinformation auf diesen Gleichstrom aufprägen. Das Steuergerät 2 hat neben der Gleichstromschnittstelle, die den Gleichstrom auf die Leitung 3 aufprägt, auch einen Empfängerbaustein, der die Modulationen 12 und 13 als Information erkennt und übernimmt. Alternativ ist es möglich, daß eine bidirektionale Datenübertragung vorgesehen wird, wobei dafür Zeitschlitze vorgesehen sein können.

Figur 4 zeigt in einer schematischen Darstellung ein Ausführungsbeispiel des erfindungsgemäßen Frontsensors. Eine Stoßstangenplastikverkleidung 15 formt einen Hohlraum bzw. Hohlräume 16, die als Kavität wirken. Die Stoßstangenplastikverkleidung 15 ist über eine Stoßstangenplastikverrastung 14 montiert. Ein Sensor, hier das Sensierungselement, ist mit Stecker 17 im Hohlraum 16 angebracht. Ein Gegenstecker führt die Leitung 3 zu dem Sensierungselement mit Stecker 17. Die Befestigung mit Stecker und Gegenstecker ist an einem Metallkern 18 angebracht. Der Sensor 17 ist in einem wasserdichten Gehäuse mit einem wasserdichten Stecker ausgeführt und hält die Temperatur im vorderen Motorraumbereich, das sind ungefähr 105°C, aus.

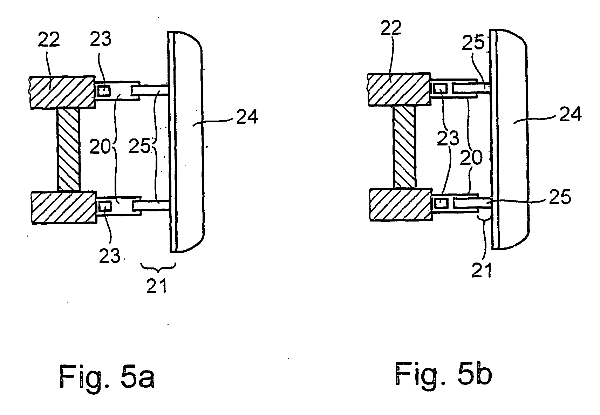

Bei einer Unterteilung der Kavität 16 in beispielsweise drei oder mehrere kleinere Einzelkavitäten mit je einem eingebauten Sensor kann die Fußgängeraufprallstelle lokalisiert werden. Dabei sind die einzelnen Sensierungselemente mit den Kavitäten dann an das Steuergerät 2 über einzelne Leitungen oder über einen gemeinsamen Bus mit dem Steuergerät 2 verbunden. Diese mehreren Sensoren, die in den Stoßstangenverkleidungshohlräumen bzw. unter dem Motorhaubenvorderteil angebracht sind, können dann von einer Fußgängeraufprallelektronik vorausgewertet und nur ein einziges vorverarbeitetes Fußgängeraufprallsignal zum zentralen Airbag-Auslösegerät 2 übertragen werden. D.h., daß wenn mehrere Sensierungselemente 1 mit Kavitäten 4 vorhanden sind, werden deren Signale in einer gemeinsamen Auswerteelektronik, beispielsweise einem Mikrocontroller, gemeinsam ausgewertet, und nur dieses Signal wird dann zum Steuergerät 2 übertragen. Dies kann die Aufrüstung von Fahrzeugen oder auch die Integration dieses Fußgängeraufprallsensierungskonzepts vereinfachen. Fig. 5a und Fig. 5b zeigen den Aufbau mit Prallboxen vor und nach einer Kollision. In Fig. 5a sind an Längs- bzw. Querträgern 22 jeweils Prallboxen 20 mit Sensoren 23 zur Aufnahme von jeweils einem Stoßstangenhalter 25 dargestellt. Die Stoßstangenhalter 25 gehören zu einer Stoßstange 24 mit Außenhaut, Schaum und Träger. Eine Fußgängerschutzzone 21 ist durch einen Abstand vom Ende der Prallboxen 20 bis zur Stoßsttange 24 definiert. In Fig. 5b ist die gleiche Konfiguration wie in Fig. 5a dargestellt. Nun ist aber eine Kollision aufgetreten, so dass die Stoßstangenhalter 25 in die Prallboxen 20 eingefahren sind, so dass die Fußgängerschutzzone 21 um dieses Einfahren verkürzt wurde.

## Patentansprüche

1. Frontsensor eines Fahrzeugs, wobei der Frontsensor als ein Kontaktsensor ausgebildet ist, wobei der Frontsensor wenigstens eine Kavität (4, 16) aufweist, in der jeweils ein Sensierungselement (1, 17) vorgesehen ist, wobei der Frontsensor einen Aufprall mittels des Sensierungselements (1, 17) in Abhängigkeit von einer Verformung der Kavität (4, 16) erkennt, **dadurch gekennzeichnet, daß** das Sensierungselement (1, 17) als Druck- oder Temperatursensor ausgebildet ist, wobei die Kavität derart weitgehend geschlossen ist, dass ein adiabatischer Druck- und Temperaturanstieg bei einer Verformung der Kavität auftritt.

2. Frontsensor nach Anspruch 1 **dadurch gekennzeichnet daß** die Kavität (4,16) aus einem Kunststoff gefertigt ist.

3. Frontsensor nach einem der vorhergehenden Ansprüche, **dadurch gekennzeichnet, daß** die Kavität (4, 16) wasserdicht ausgeführt ist.

4. Frontsensor nach einem der vorhergehenden Ansprüche, **dadurch gekennzeichnet, daß** der Frontsensor über eine Stromschnittstelle zu einem Steuergerät (2) für Rückhaltemittel (5) verbindbar ist.

5. Frontsensor nach einem der vorhergehenden Ansprüche, **dadurch gekennzeichnet, dass** die Kavität als Prallbox (20) ausgebildet ist, die einen Stoßstangenhalter (25) aufnehmen kann.

## Revendications

1. Détecteur frontal d'un véhicule, configuré sous la forme d'un détecteur de contact, présentant au moins une cavité (4, 16) logeant chaque fois un élément de détection (1, 17), pour détecter un choc au moyen de l'élément de détection, (1, 17) en fonction d'une déformation de la cavité (4, 16),
**caractérisé en ce que**
l'élément de détection (1, 17) est un capteur de pression ou de température, la cavité étant en majeure partie fermée de telle sorte qu'une déformation de la cavité provoque une augmentation de pression et de température adiabatique.

2. Détecteur frontal selon la revendication 1,
**caractérisé en ce que**
la cavité (4, 16) est en matière plastique.

3. Détecteur frontal selon l'une des revendications précédentes,
**caractérisé en ce que**
la cavité (4, 16) est étanche à l'eau.

4. Détecteur frontal selon l'une des revendications précédentes,
**caractérisé en ce que**
le détecteur frontal peut être relié par une interface électrique à un appareil de commande (2) de moyens de retenue (5).

5. Détecteur frontal selon l'une des revendications précédentes,
**caractérisé en ce que**
la cavité est configurée sous forme de boîtier d'impact (20) pouvant recevoir une attache de pare-choc (25).

## Claims

1. Front sensor of a vehicle, wherein the front sensor is in the form of a contact sensor, wherein the front sensor has at least one cavity (4, 16) in which a sensing element (1, 17) is provided in each case, wherein the front sensor detects a collision by means of the sensing element (1, 17) as a function of deformation of the cavity (4, 16), **characterized in that** the sensing element (1, 17) is in the form of a pressure or temperature sensor, wherein the cavity is largely closed in such a way that an adiabatic increase in pressure or temperature occurs when the cavity is deformed.

2. Front sensor according to Claim 1, **characterized in that** the cavity (4, 16) is made in a plastic.

3. Front sensor according to either of the preceding claims, **characterized in that** the cavity (4, 16) is designed to be water-tight.

4. Front sensor according to one of the preceding claims, **characterized in that** the front sensor can be connected to a controller (2) for retaining means (5) via a current interface.

5. Front sensor according to one of the preceding claims, **characterized in that** the cavity is in the form of an impact-absorbing box (20) which can accommodate a bumper holder (25).
